# EUROPEAN PATENT APPLICATION

(11) **EP 0 726 391 A1**
(43) Date of publication of application: **14.08.1996**
(21) Application number: 96500020.1
(22) Date of filing: 07.02.1996
(51) Int. Cl.: F03B 13/14, F03B 13/18

(54) **Wave energy converter**

(30) Priority: 10.02.1995 ES 9500273
(71) Applicant: Alvarez Hornia, Mario, 33006 Oviedo (ES); Alvarez Muniz, Antonio, 33213 Gijon (Asturias) (ES)
(72) Inventor: Alvarez Hornia, Mario, 33006 Oviedo (ES); Alvarez Muniz, Antonio, 33213 Gijon (Asturias) (ES)
(74) Representative: Garcia Cabrerizo, Francisco

(57) **Abstract**

The purpose of the system object of this invention is to produce electric energy based on the usage of the force of sea waves and of sea water level variation. To this end said waves are channelled towards a canal set between two parallel embankments (1), inside which are arranged a plurality of buoys (4) which intermittent rise and fall produced by said waves place into motion a number of mechanism at the end of which there is an electric generator that is actuated by said mechanisms, wherefrom electric energy is then produced.

## Description

The invention refers to an energy transformation system, specifically dealing with the transformation of mechanical energy to electrical energy using the power of the sea waves and sea level variations.

There are many energy transformation procedures, systems and facilities for which invention patents have been requested. Among the energy transformation systems and procedures may be emphasized those that try to obtain electrical energy from the energy produced by sea waves, and although the procedures and/or systems therein used do seem theoretically viable, although it is evident that their practical development seems impossible to perform, due to the complexity required to build the energy transformation facility, the many components to be taken into consideration and the problems that arise whenever determinate efforts are made to start up the corresponding facility.

The system object of this invention, due to the simplicity of the facility required for its execution, is perfectly viable and capable of commercial exploitation, being designed to obtain electrical energy based on the usage of the power of sea waves and sea water level variations.

More specifically, the system consists of directing sea waves, captured between two embankments converging towards a canal. Once the waves arrive there, they are compressed by their own momentum, so that the water level rises with the passage of each wave because of their compression between the narrow walls. Given that the waves arrived intermittently, sea water level shall rise and fall with a regular cadence.

That is to say, the objective is to build two embankments. They are arranged in parallel for a considerable stretch, forming the canal. They then adopt a diverging arrangement, towards the open sea, shaped as a funnel, through which larger end are captured the waves running towards the canal.

Within the previously mentioned canal are installed a variable number of floating buoys, each of which is secured to both embankments by two lever arms that are then joined to a shaft and gear assembly driving an electric generator.

The continuous rise and fall of the water inside the canal imposes the same motion to the floating buoys, which move as a consequence of the pushing and pulling forces alternatively produced by flotation and gravity.

Buoy motion is transferred to a shaft through the lever arm, said shaft being joined to a crown wheel that is geared to two pinions fitted upon a main shaft. This latter shaft is the one that will finally drive the energy generator, after the prior intermediate installation of the proper turning speed regulation and variation mechanisms, as needed.

Each of the pinions installed onto the main shaft are further fitted with a ratchet that causes the shaft to rotate always in the same direction.

The installation effected upon the dock of one of the embankments must be exactly duplicated upon the other one, given that each buoy has a lever arm on each side, so that the installation shall then have two identical electrical generators, with a considerable power rating.

In order to complement the description effected below and with the aim of aiding towards a better understanding of the features of the invention, a detailed description is herein offered based on a set of drawings attached to this patent specification, as an integral part thereof, and where, with a merely illustrative but not limitative character, the following has been duly represented:

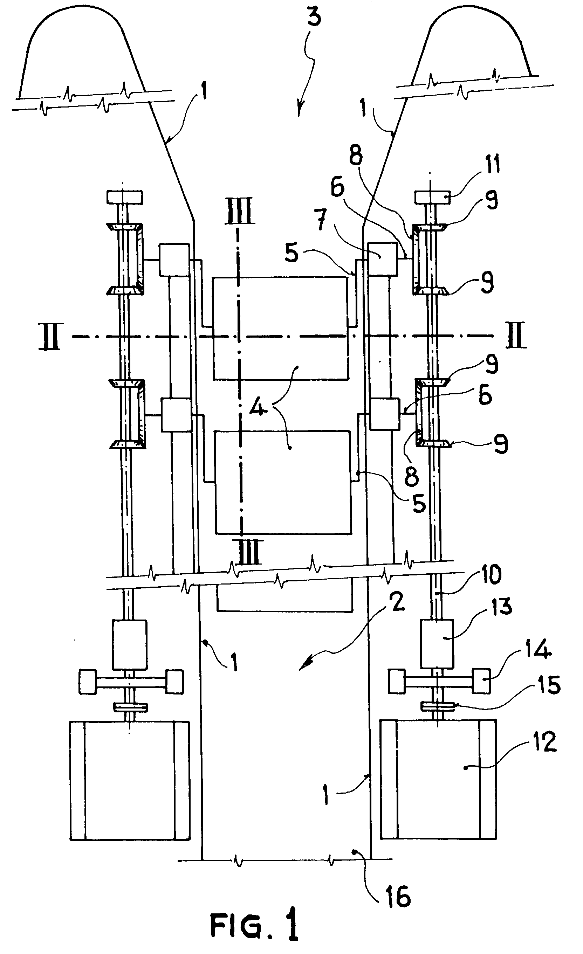

Figure 1 shows an upper plan view schematic representation of a facility executed pursuant to the system object of this invention.

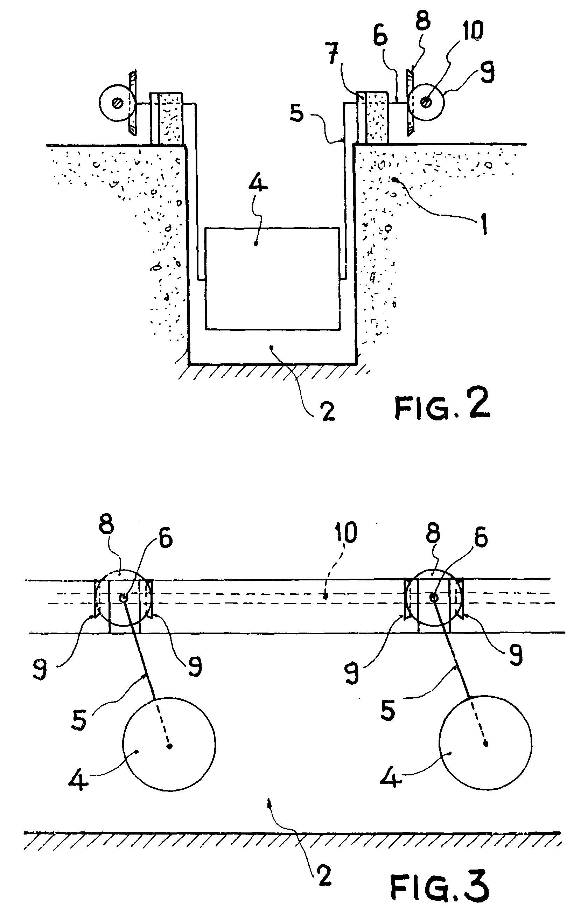

Figure 2 shows a section view as per the cut away line II-II of figure 1.

Figure 3 shows a section view as per the cut away line III-III of figure 1.

As may be observed in the previously mentioned figures, the system object of this invention is based on channelling sea waves between a set of two embankments or walls (1) running in parallel to each other so as to determine a narrow canal (2), and which in the direction of the open sea run away from each other in order to determine a wave inlet mouth (3) running towards the previously mentioned canal (1). The distance or opening between the final ends of the embankments (1) shall be arranged as a function of the length of the wave to be so captured.

A plurality of buoys (4) with the proper buoyancy, weight and mechanical resistance, set in accordance with the function to be performed, movements and/or efforts to which they are to be subjected, are arranged sideways inside the canal (2).

From each such buoy (4) emerge two side lever arms (5) respectively ending on shafts (6) borne by proper supports (7), located upon the water channelling embankments (1). Each such shaft (6) has a crown wheel (8) at its end that simultaneously engages a couple of pinions (9) fitted upon a shaft (10), being this common to all the pinions (9) of each side, so that the rotation of the pinions will cause the rotation of the shaft (10). The latter shaft is considered to be the main shaft and is supported at one of its ends by a bracket (11) whereas the opposite end, considered to be the outlet end, drives an electrical energy generator (12), with the intermediate placement of a number of components or devices described below.

The pinions (9) are respectively associated to ratchets which arrangement is such that whenever one of the pinions drives the shaft the other one shall turn loosely, thus enabling the sense of rotation of the main shaft (10) to remain always constant, whichever pinion (9) may at any given time be driven or rotated by the crown wheel (8). That is to say, said crown wheel or ring gear (8) shall alternatively drive each one of the pinions, depending upon the elevation and or descent of the relevant buoy (4).

Before arriving to the electric generator (12) the main shaft (10) includes a variable speed device (13), an inertia flywheel (14) and a coupling/regulator (15).

The purpose of the variable speed device (13) is to multiply the number of revolutions of the main shaft (10) to enable it to comply with the technical requirements of the generator (12).

The purpose of the inertia flywheel (14) is to supply uniformity to the speed of rotation of the main shaft (10) before it is coupled to the generator (12), eliminating the "peaks" or variations in respect of the rotation of said shaft (10), as a consequence of the greater or lesser cadence of arrival of sea waves.

The purpose of the coupling/regulator (15) is to supply the required power to the generator (12), constituting what may be considered to be a power coupling that regulates the number of revolutions required by the generator (12).

The system herein described bases its operation upon the power of sea waves which gain access to the canal (2) through the inlet mouth (3), lifting up the buoys (4) causing their lever arms (5) to transfer the turning movement of their respective crown wheels (8), so that they drive the corresponding pinion (9), causing the rotation of the main shaft (10), by which the electric generator (12) is then actuated. During the descent of the buoys (4), the inverse turning direction shall cause each crown wheel (8) to drive the other pinion, thus producing the same direction of rotation in the main shaft (10).

Finally, the water inside the canal (2) flows outside the facility from its back end (16) and through side dewatering canals set in this area, so that it flows back to the open sea.

## Claims

1. Energy transformation system that, being designed to transform mechanical energy into electric energy using the power of sea waves and the intermittent variability of sea water level, is essentially characterized because it has a couple of parallel embankments between which runs a canal with a plurality of buoys supported by levers between the two embankments, through which levers the previously mentioned buoys rise and fall due to the sea water changes caused by the introduction and compression of sea waves inside the previously mentioned canal; having incorporated a mechanism that causes an electric generator to be actuated through the motion of the buoys.

2. Energy transformation system, pursuant to claim 1, characterized because the embankments that determine the canal open up towards the open sea, forming a sea wave inlet mouth running towards the canal.

3. Energy transformation system, pursuant to claims 1 and 2, characterized because the levers attached to the buoys end, each one of them, at a shaft carrying a crown wheel that simultaneously engages a couple of pinions fitted upon a common shaft being the main electric generator driver, with the added feature that each couple of pinions are associated to ratchets that act upon them and that alternatively allow only one of them to be driven whilst the other one turns loosely, whichever may the rotation of the crown wheel be, always producing the same sense of rotation in the main shaft.

4. Energy transformation system, pursuant to the prior claims, characterized because before the electric generator, the main shaft incorporates a variable speed device, an inertia flywheel and a coupling/regulator, the latter of which allows the revolutions required by the electric generator to be regulated.
